# FASCICULE DE BREVET EUROPEEN

(11) **EP 2 713 066 B1**
(45) Date de publication et mention de la délivrance du brevet: **18.03.2015**
(21) Numéro de dépôt: 13186291.4
(22) Date de dépôt: 27.09.2013
(51) Int. Cl.: F16C 19/26, F16C 19/40, F16C 33/37

(54) **Espaceur pour roulement à rouleaux et roulement à rouleaux comprenant de tels espaceurs**
Zwischenstück für Zylinderrollen und ein solche Zwischenstücke enthaltendes Rollenlager
Spacing body for rollers and rolling bearing containing such a spacing body

(30) Priorité: 28.09.2012 FR 1259200
(43) Date de publication de la demande: 02.04.2014
(73) Titulaire: NTN-SNR Roulements, 74000 Annecy (FR)
(72) Inventeur: Bronquard, Pierre, 74000 Annecy (FR)
(74) Mandataire: Derambure Conseil

(56) Documents cités:
- DE-A1- 2 928 269
- FR-A1- 2 324 934
- JP-A- 2007 162 916

## Description

L'invention concerne le domaine des roulements à rouleaux et elle a plus spécialement pour objet, d'une part, un espaceur spécialement destiné à un roulement à rouleaux et, d'autre part, un roulement à rouleaux comprenant de tels espaceurs.

Il est connu de l'état de la technique un roulement à rouleaux avec espaceurs, comprenant une bague extérieure, une bague intérieure, une pluralité de rouleaux montés entre l'intrados de la bague extérieure et l'extrados de la bague intérieure, et une pluralité d'espaceurs identiques disposés entre les deux bagues et intercalés entre les rouleaux.

Le document US 2010/0278470 divulgue un espaceur ayant en section transversale une forme générale s'apparentant à celle d'un diabolo. L'espaceur comprend deux faces concaves opposées, inclinées l'une par rapport à l'autre. Ces deux faces concaves coopèrent avec les deux faces latérales cylindriques des deux rouleaux situés de part et d'autre. L'espaceur comprend également deux parties d'appui situées aux deux extrémités, dont les faces d'appui coopèrent avec la piste de roulement des rouleaux, lorsque le roulement est au repos. Cette piste de roulement des rouleaux est ménagée sur la bague extérieure ou sur la bague intérieure du roulement. L'espaceur comprend également un évidement entre les deux parties d'appui. La forme donnée à l'espaceur, à savoir aux deux faces concaves, est telle que, lorsque le roulement est en rotation, l'espaceur est écarté de la piste de roulement. En effet, les deux faces concaves s'étendent radialement à partir des faces d'appui des deux parties d'appui au-delà de l'enveloppe cylindrique des axes des rouleaux, les deux faces concaves s'étendant radialement sur une distance de l'ordre d'une fois et demie le diamètre des rouleaux. Avec la structure prévue par ce document, l'aire de contact entre les espaceurs et les rouleaux est importante, ce qui n'est pas souhaitable du fait des frottements. Ceux-ci sont d'autant plus importants que les rouleaux ont pour fonction d'écarter les espaceurs de la piste de roulement lorsque le roulement est en rotation. Enfin, l'usinage des faces concaves est décisif, celles-ci devant être ajustées aux faces latérales des rouleaux.

Le document EP 1 961 982 décrit un espaceur comprenant une portion espaceur stricto sensu, ayant également deux faces opposées concaves aptes à coopérer avec les deux rouleaux de part et d'autre. L'espaceur comprend deux agencements de butée axiale, situés aux deux parties extrêmes coopérant avec les faces d'extrémités des rouleaux. L'espaceur comprend également un agencement de butée radiale coopérant avec les rives axiales de la piste de roulement. Avec la structure prévue par ce document, l'espaceur est volumineux, faisant saillie de part et d'autre des rouleaux, outre que, comme précédemment, l'aire de contact entre les espaceurs et les rouleaux est importante, étant non seulement latérale mais également terminales et que l'usinage des faces concaves est décisif.

Le document DE 29 28 269 décrit un roulement comprenant des espaceurs munis de languettes de tenue élastiques, ayant en section transversale, une forme générale trapézoïdale avec un petit côté adjacent à la portion médiane de guidage et à l'opposé un grand côté et deux côtés opposés inclinés l'un par rapport à l'autre, correspondant aux deux faces opposées propres à coopérer avec les rouleaux. Avec cette structure, la portion espaceur stricto sensu de chaque espaceur s'étend radialement à partir des rives axiales de la rainure périphérique de réception des rouleaux en allant au-delà de l'enveloppe cylindrique des axes des rouleaux. Un tel espaceur est complexe à réaliser, lourd et volumineux.

Le document JP 2007 162916 décrit également un roulement comprenant des espaceurs dont la portion espaceur stricto sensu s'étend radialement à partir des rives axiales de la rainure périphérique de réception des rouleaux en allant au-delà de l'enveloppe cylindrique des axes des rouleaux.

Le document FR 2 324 934 décrit un palier à roulement pour le montage de pièces ou organes d'une manière permettant leur déplacement longitudinal.

Il existe par conséquent le besoin d'un espaceur pour un roulement à rouleaux et d'un roulement à rouleaux comprenant un espaceur tels que l'aire de contact entre les espaceurs et les rouleaux soit minimisée, la taille de l'espaceur réduite, le contact entre l'espaceur et les bagues d'aire aussi limitée que possible, et cela moyennant une réalisation aisée et aussi peu coûteuse que possible, où l'usinage des faces coopérant avec les rouleaux n'est pas critique, et sans empêcher le graissage du roulement.

A cet effet, selon un premier aspect, l'invention a pour objet un espaceur spécialement destiné à un roulement à rouleaux comprenant une bague extérieure, une bague intérieure, une pluralité de rouleaux montés entre elles et une pluralité d'espaceurs intercalés entre les rouleaux vers l'une des bagues, ledit espaceur, rigide, allongé le long d'une direction axiale, comprenant :
▪ une portion espaceur stricto sensu, ayant deux faces opposées aptes à coopérer avec deux rouleaux de part et d'autre,
▪ deux agencements de butée axiale, situés aux deux parties extrêmes, aptes à coopérer avec le roulement de sorte à empêcher le désengagement axial de l'espaceur,
▪ un agencement de butée radiale, apte à coopérer avec le roulement de sorte à empêcher son déplacement radial intempestif,
▪ une portion médiane de guidage prolongeant transversalement la portion espaceur stricto sensu, ayant deux faces de guidage axial, disposées transversalement aux deux extrémités, tournées vers l'extérieur de l'espaceur, aptes à coopérer avec les deux rives transversales d'une rainure périphérique de réception des rouleaux ménagée dans l'intrados de la bague extérieure ou l'extrados de la bague intérieure, formant les deux agencements de butée axiale,
▪ deux zones de guidage radial, disposées axialement et ménagées aux deux extrémités de la portion espaceur stricto sensu, tournées vers le côté de la portion médiane de guidage et opposé aux faces propres à coopérer avec les rouleaux, adjacentes aux deux faces de guidage axial, aptes à coopérer avec les deux rives axiales de la rainure périphérique de réception des rouleaux, formant l'agencement de butée radiale.

Cet espaceur est tel que la portion espaceur stricto sensu a, en section transversale, une forme générale trapézoïdale avec un grand côté adjacent à la portion médiane de guidage et à l'opposé un petit côté et deux côtés opposés inclinés l'un par rapport à l'autre, correspondant aux deux faces opposées propres à coopérer avec les rouleaux.

Selon une réalisation, les deux faces propres à coopérer avec les rouleaux de la portion espaceur stricto sensu s'étendent sur une ouverture d'angle a comprise entre 45° et 90°.

Selon une réalisation, chaque zone de guidage radial a en section transversale un profil complémentaire du profil circulaire de la rive axiale de la rainure périphérique de réception des rouleaux, moyennant une surface de contact limitée entre elles.

Selon une réalisation, chaque zone de guidage radial a en section transversale un profil incurvé avec un rayon de courbure plus petit que le rayon de courbure du profil circulaire de la rive axiale de la rainure périphérique de réception des rouleaux.

Selon une réalisation, chaque zone de guidage radial a en section transversale un profil incurvé avec au moins deux zones axiales en saillie et une zone axiale en creux de sorte que la surface de contact avec la rive axiale de la rainure périphérique de réception des rouleaux comprenne au moins deux zones étendues linéairement le long d'une ou de plusieurs lignes axiales correspondant aux deux zones axiales en saillie, séparées par une zone sans contact correspondant à la zone axiale en creux.

Selon un deuxième aspect, l'invention a pour objet un roulement à rouleaux avec espaceurs, comprenant une bague extérieure, une bague intérieure, une pluralité de rouleaux montés entre l'intrados de la bague extérieure et l'extrados de la bague intérieure, l'un au moins dudit intrados et dudit extrados comportant une rainure périphérique de réception des rouleaux ayant un fond, deux rives transversales adjacentes au fond et deux rives axiales adjacentes aux deux rives transversales, et une pluralité d'espaceurs identiques tels qu'ils ont été précédemment décrits, intercalés entre les rouleaux et adjacents audit intrados ou extrados avec rainure de réception.

Ce roulement est tel que :
▪ les deux faces de guidage axial de la portion médiane de guidage de chaque espaceur coopèrent avec glissement avec les deux rives transversales de la rainure périphérique de réception des rouleaux,
▪ les deux zones de guidage radial de chaque espaceur coopèrent avec glissement avec les deux rives axiales de la rainure périphérique de réception des rouleaux,
▪ la portion espaceur stricto sensu de chaque espaceur s'étend radialement à partir des rives axiales de la rainure périphérique de réception des rouleaux tout en restant en deçà de l'enveloppe cylindrique des axes des rouleaux.

Selon une réalisation, les deux extrémités axiales de chaque espaceur sont situées sensiblement dans le plan ou en retrait du plan transversal adjacent de la bague avec rainure périphérique de réception des rouleaux.

Selon une réalisation, la face libre de portion médiane de guidage opposée à la portion espaceur stricto sensu de chaque espaceur est écartée du fond de la rainure périphérique de réception des rouleaux, un espace libre apte à la présence d'un lubrifiant étant ménagé entre eux.

Selon une réalisation, chaque espaceur est au contact avec les rouleaux au plus à l'endroit des deux faces opposées propres à coopérer avec les rouleaux de sa portion espaceur stricto sensu.

Selon une réalisation, la portion espaceur stricto sensu de chaque espaceur s'étend radialement à partir des rives axiales de la rainure périphérique de réception des rouleaux sur une distance de l'ordre de ou inférieure au tiers du diamètre des rouleaux.

Selon une première réalisation, la rainure périphérique de réception des rouleaux avec laquelle coopèrent les espaceurs est ménagée dans l'intrados de la bague extérieure, alors que selon une seconde réalisation, elle est ménagée dans l'extrados de la bague intérieure.

On décrit maintenant brièvement les figures des dessins.
La figure 1 est une vue en perspective d'un espaceur selon l'invention du côté de sa portion médiane de guidage.
La figure 2 est une vue en élévation d'un roulement à rouleaux comportant des espaceurs tels que celui de la figure 1, dans une réalisation où la rainure périphérique de réception des rouleaux avec laquelle coopèrent les espaceurs est ménagée dans l'intrados de la bague externe.
La figure 3 est une vue en coupe axiale du roulement de la figure 2.

Ce qui suit est un exposé détaillé de plusieurs modes de réalisation de l'invention assorti d'exemples et de référence aux dessins.

L'invention a pour objet un espaceur 1 spécialement destiné à un roulement à rouleaux 2 (parfois désigné par la suite, par ellipse, roulement), ainsi que le roulement 2 comprenant une pluralité d'espaceurs 1 identiques. Par extension, l'invention a également pour objet la pluralité d'espaceurs 1 destinés à faire partie d'un roulement 2. En outre, l'invention vise le roulement 2 dans l'un quelconque de ses états possibles : état assemblé et isolé, non encore monté ; état assemblé monté sur un dispositif auquel il est destiné ; état désassemblé dans lequel ses pièces constitutives sont dissociées les unes des autres, au moins pour partie.

Le roulement 2, d'axe 2a, comprend, de façon connue de l'homme du métier, une bague extérieure 3 et une bague intérieure 4 de forme annulaire cylindrique d'axe 2a, avec un espace vide annulaire 5 entre elles.

Le roulement 2 comprend également une pluralité de rouleaux 6, de forme cylindrique ou pseudo-cylindrique, d'axes 6a disposés au moins sensiblement parallèlement à l'axe 2a. Par exemple, dans la réalisation représentée sur les dessins, il est prévu quatorze rouleaux 6. Mais cette réalisation n'est qu'illustrative et nullement limitative. Les rouleaux 6 sont montés pour partie entre - et de manière à coopérer avec - l'intrados 3a de la bague extérieure 3 et l'extrados 4a de la bague intérieure 4 dans l'espace 5. Les rouleaux 6 sont montés de sorte à être empêchés de se désengager axialement. A cet effet, l'un au moins dudit intrados 3a et dudit extrados 4a comporte une rainure périphérique de réception 7 des rouleaux 6, annulaire, ajustée pour que les rouleaux 6 puissent y être logés pour partie, s'y déplacer en rotation autour de l'axe 2a, tout en étant bloqués axialement.

Un rouleau 6 comporte une face latérale cylindrique 6b et deux faces transversales d'extrémité à contour circulaire 6c, parfois désignées respectivement, par ellipse, face latérale 6b et faces transversales d'extrémité 6c.

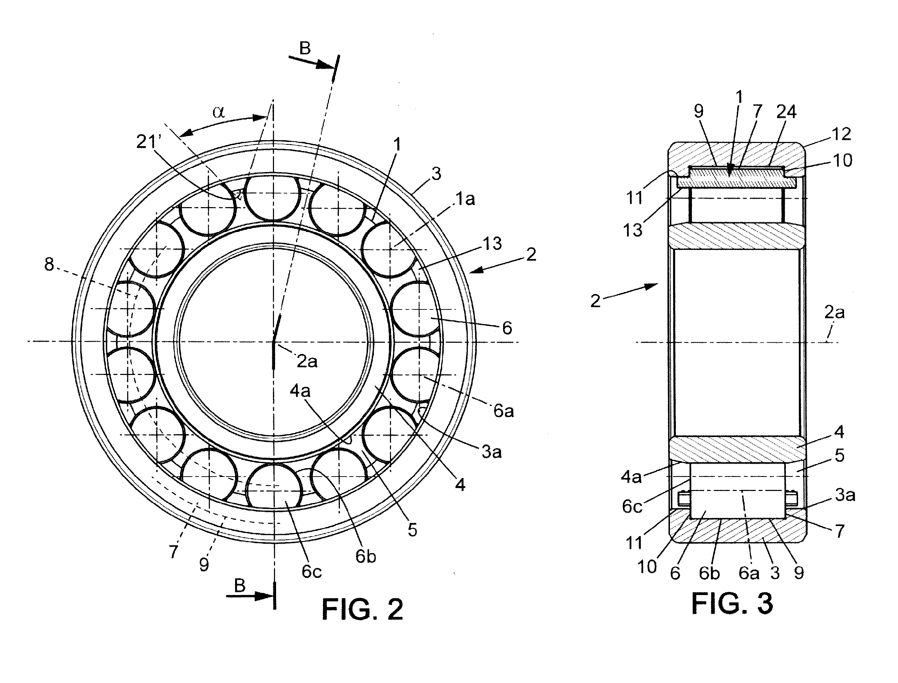

Par « axial », l'on entend une direction parallèle ou sensiblement parallèle à l'axe 2a ou aux axes 6a (par exemple le plan de la figure 3).

Par « transversal », l'on entend ce qui est perpendiculaire ou orthogonal ou sensiblement perpendiculaire ou orthogonal à l'axe 2a ou aux axes 6a (par exemple le plan de la figure 2).

Dans la réalisation représentée sur les dessins, la rainure de réception 7 est ménagée dans l'intrados 3a de la bague extérieure 3. Lorsque la rainure 7 est ménagée dans l'extrados 4a de la bague intérieure 4, la structure est la même, en miroir de la structure représentée par rapport à une enveloppe 8 qui est l'enveloppe cylindrique des axes 6a des rouleaux 6. Le cas échéant, il peut être prévu deux rainures, l'une ménagée dans l'intrados 3a de la bague extérieure 3 et l'autre ménagée dans l'extrados 4a de la bague intérieure 4.

Une rainure 7 comporte - et est limitée par - un fond 9, cylindrique. Elle comporte - et est limitée par - également, deux rives transversales 10 adjacentes au fond 9. Ces rives transversales 10 sont monoblocs avec la bague 3 ou 4 correspondante ou bien elles sont rapportées sur elle. Le fond 9 et les rives transversales 10 forment la rainure 7 qui en section axiale a une forme générale de U ou de pseudo-U. La profondeur de la rainure 7 est de l'ordre d'une fraction du rayon R des rouleaux 6, par exemple de l'ordre de 20% à 30%, ces valeurs étant données de façon illustrative et nullement limitative. La largeur de la rainure 7 correspond à la longueur axiale des rouleaux 6, au jeu nécessaire à leur rotation près.

La rainure 7 a également deux rives axiales 11, cylindriques, formées, dans la réalisation représentée sur les dessins, par l'intrados 3a de la bague extérieure 3. Ces deux rives axiales 11 sont situées axialement de part et d'autre des deux rives transversales 10 et s'étendent jusqu'aux deux faces transversales 12 de la bague extérieure 3, lesquelles peuvent être également les deux faces transversales de la bague intérieure 4, et donc les deux faces transversales du roulement 2.

Le roulement 2 comprend également une pluralité d'espaceurs 1 identiques, en même nombre que la pluralité de rouleaux 6. Ces espaceurs 1 sont intercalés entre les rouleaux 6, de sorte que les espaceurs 1 et les rouleaux 6 soient adjacents entre eux, de façon alternée, aux jeux nécessaires près pour que la rotation ne soit pas entravée et sans nécessité d'un contact entre tous les espaceurs 1 et tous les rouleaux 6.

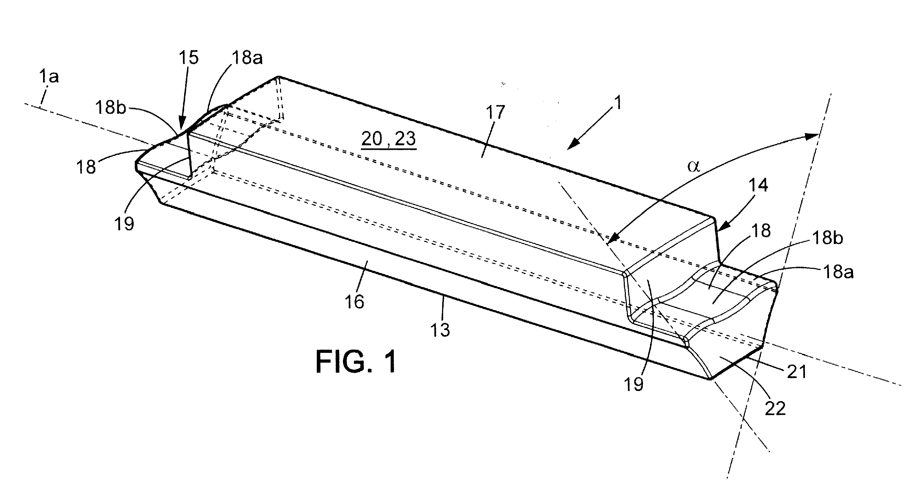

Un espaceur 1 est une pièce rigide, allongée le long d'une direction axiale 1a, qui, dans une réalisation typique est monobloc (voir figure 1). Selon les réalisations, l'espaceur 1 est métallique ou bien en un matériau plastique ou en un matériau thermoplastique.

L'espaceur 1 comprend tout d'abord les trois parties fonctionnelles que sont une portion espaceur stricto sensu 13, deux agencements de butée axiale 14 et un agencement de butée radiale 15.

La portion espaceur stricto sensu 13 comporte deux faces opposées 16 aptes à coopérer avec deux rouleaux disposés de part et d'autre de l'espaceur 1 considéré.

Dans une réalisation possible mais non limitative, ces deux faces 16 sont concaves de sorte à être plus ou moins complémentaires des faces latérales 6b des rouleaux 6. Toutefois, contrairement à la disposition constructive d'espaceurs tels que ceux de l'état de la technique connu décrits plus haut, il n'est pas impératif que les faces 16 soient précisément et exactement complémentaires des faces latérales 6b. En outre, les rouleaux 6 n'exercent pas la fonction de porter les espaceurs pour les écarter de la bague avec laquelle ils coopèrent.

La portion espaceur stricto sensu 13 de chaque espaceur 1 s'étend radialement à partir des rives axiales 11 de la rainure 7 tout en restant en deçà de l'enveloppe cylindrique 8 des axes 6a des rouleaux 6. Ainsi, plus spécialement, la portion espaceur stricto sensu 13 peut s'étendre radialement à partir des rives axiales 11 sur une distance de l'ordre de ou inférieure au tiers du diamètre 2xR des rouleaux 6.

Les deux agencements de butée axiale 14 sont situés aux deux parties extrêmes de l'espaceur 1. Ils sont aptes à coopérer avec le roulement 2, de sorte à empêcher le désengagement axial de l'espaceur 1.

L'agencement de butée radiale 15, quant à lui, est apte à coopérer avec le roulement 2, de sorte à empêcher son déplacement radial intempestif.

L'espaceur comprend par ailleurs une portion médiane de guidage 17 et deux zones de guidage radial 18.

La portion médiane de guidage 17 prolonge transversalement la portion espaceur stricto sensu 13.

Cette portion médiane de guidage 17 comporte deux faces de guidage axial 19, disposées transversalement aux deux extrémités de l'espaceur 1. Ces deux faces de guidage axial 19 sont tournées vers l'extérieur de l'espaceur 1.

Ces deux faces de guidage axial 19 sont aptes à coopérer avec les deux rives transversales 10, de sorte à former les deux agencements de butée axiale 14.

Les deux zones de guidage radial 18 sont disposées, c'est-à-dire s'étendent, axialement. Elles sont ménagées aux deux extrémités de la portion espaceur stricto sensu 13. Elles sont tournées vers le côté de la portion médiane de guidage 17 et vers l'opposé des faces 16 propres à coopérer avec les rouleaux 6. En outre, les deux zones de guidage radial 18 sont adjacentes aux deux faces de guidage axial 19, respectivement.

Les deux zones de guidage radial 18 sont aptes à coopérer avec les deux rives axiales 11, respectivement de la rainure 7, de sorte à former l'agencement de butée radiale 15.

Dans le roulement 2, d'une part, les deux faces de guidage axial 19 de la portion médiane de guidage 17 de chaque espaceur 1 coopèrent avec glissement avec les deux rives transversales 10 de la rainure 7.

D'autre part, les deux zones de guidage radial 18 de chaque espaceur 1 coopèrent avec glissement avec les deux rives axiales 11 de la rainure 7.

La portion espaceur stricto sensu 13 a, en section transversale, une forme générale trapézoïdale avec un grand côté 20 adjacent à la portion médiane de guidage 17, à l'opposé un petit côté 21, et deux côtés opposés inclinés l'un par rapport à l'autre 16, correspondant aux deux faces 16, opposées, propres à coopérer avec les rouleaux 6.

Dans la réalisation représentée sur les dessins (voir figures 1 et 2), les deux faces 16 propres à coopérer avec les rouleaux 6 de la portion espaceur stricto sensu 13 s'étendent sur une ouverture d'angle α comprise entre 45° et 90°. Ainsi, les espaceurs 1 de l'invention sont plus trapus que ceux de l'état de la technique connu, avec les avantages inhérents : quantité de matière, masse, coût, inertie. Dans la mesure où les deux faces 16 sont concaves, comme dans la réalisation particulière et non limitative représentée, l'ouverture d'angle α s'entend de celle entre les plans moyens des faces 16.

Une zone de guidage radial 18 a, en section transversale, un profil complémentaire du profil circulaire de la rive axiale 11 de la rainure 7, moyennant une surface de contact limitée entre elles, propre à réduire le frottement. Par exemple, selon une réalisation, une zone de guidage radial 18 a, en section transversale, un profil incurvé avec un rayon de courbure plus petit que le rayon de courbure du profil circulaire de la rive axiale 11. Ou bien, comme représenté sur les dessins, une zone de guidage radial 18 a, en section transversale, un profil incurvé avec au moins deux zones axiales en saillie 18a et une zone axiale en creux 18b. De la sorte, la surface de contact de la zone de guidage axial 18 avec la rive axiale 11 comprend les au moins deux zones étendues linéairement le long d'une ou de plusieurs lignes axiales correspondant aux deux zones axiales en saillie 18a, lesquelles sont séparées par une zone sans contact correspondant à la zone axiale en creux 18b.

Comme cela est bien visible sur la figure 3, les deux extrémités axiales 22 de chaque espaceur 1, disposées transversalement, sont situées sensiblement au plus dans le plan, ou en retrait du plan, formé par la face transversale 12 de la bague 3. En tout état de cause, il n'est pas nécessaire que ces extrémités axiales 22 saillent des plans des faces 12.

Egalement, comme cela est bien visible sur la figure 3, la face libre 23 de la portion médiane de guidage 17 qui est opposée à la portion espaceur stricto sensu 13 de chaque espaceur 1, et qui correspond au grand côté 20 du trapèze dont il a été précédemment question, est écartée du fond 9 de la rainure 7. Ainsi, il est ménagé entre eux un espace libre 24 apte à la présence d'un lubrifiant.

Chaque espaceur 1 est au contact avec les rouleaux 2 au plus à l'endroit des deux faces 16. Ainsi, contrairement à certaines réalisations de l'état de la technique connu, les espaceurs 1 ne viennent pas au contact des faces transversales d'extrémité 6c des rouleaux 6.

## Revendications

1. Espaceur (1) spécialement destiné à un roulement à rouleaux (2) comprenant une bague extérieure (3), une bague intérieure (4), une pluralité de rouleaux (6) montés entre elles et une pluralité d'espaceurs (1) intercalés entre les rouleaux (6) vers l'une des bagues (3, 4), ledit espaceur (1), rigide, allongé le long d'une direction axiale (1a), comprenant:
▪ une portion espaceur stricto sensu, ayant deux faces opposées aptes à coopérer avec deux rouleaux de part et d'autre,
▪ deux agencements de butée axiale (14), situés aux deux parties extrêmes, aptes à coopérer avec le roulement (2) de sorte à empêcher le désengagement axial de l'espaceur,
▪ un agencement de butée radiale (15), apte à coopérer avec le roulement (2) de sorte à empêcher son déplacement radial intempestif,
▪ une portion médiane de guidage (17) prolongeant transversalement la portion espaceur stricto sensu (13), ayant deux faces de guidage axial (19), disposées transversalement aux deux extrémités, tournées vers l'extérieur de l'espaceur (1), aptes à coopérer avec les deux rives transversales (10) d'une rainure périphérique de réception (7) des rouleaux (6) ménagée dans l'intrados (3a) de la bague extérieure (3) ou l'extrados (4a) de la bague intérieure (4), formant les deux agencements de butée axiale (14),
▪ deux zones de guidage radial (18), disposées axialement et ménagées aux deux extrémités de la portion espaceur stricto sensu (13), tournées vers le côté de la portion médiane de guidage (17) et opposé aux faces (16) propres à coopérer avec les rouleaux (6), adjacentes aux deux faces de guidage axial (19), aptes à coopérer avec les deux rives axiales (11) de la rainure périphérique de réception (7) des rouleaux (6), formant l'agencement de butée radiale (15),
**caractérisé par le fait que** la portion espaceur stricto sensu (13) a, en section transversale, une forme générale trapézoïdale avec un grand côté (20) adjacent à la portion médiane de guidage (17) et à l'opposé un petit côté (21) et deux côtés opposés inclinés l'un par rapport à l'autre, correspondant aux deux faces opposées (16) propres à coopérer avec les rouleaux (6).

2. Espaceur (1) selon la revendication 1, dans lequel les deux faces (16) propres à coopérer avec les rouleaux (6) de la portion espaceur stricto sensu (13) s'étendent sur une ouverture d'angle α comprise entre 45° et 90°.

3. Espaceur (1) selon l'une quelconque des revendications 1 et 2, dans lequel chaque zone de guidage radial (18) a en section transversale un profil complémentaire du profil circulaire de la rive axiale (11) de la rainure périphérique de réception (7) des rouleaux (6), moyennant une surface de contact limitée entre elles.

4. Espaceur (1) selon la revendication 3, dans lequel chaque zone de guidage radial (18) a en section transversale un profil incurvé avec un rayon de courbure plus petit que le rayon de courbure du profil circulaire de la rive axiale (11) de la rainure périphérique de réception (7) des rouleaux (6).

5. Espaceur (1) selon la revendication 3, dans lequel chaque zone de guidage radial (18) a en section transversale un profil incurvé avec au moins deux zones axiales en saillie (18a) et une zone axiale en creux (18b) de sorte que la surface de contact avec la rive axiale (11) de la rainure périphérique de réception (7) des rouleaux (6) comprenne au moins deux zones étendues linéairement le long d'une ou de plusieurs lignes axiales correspondant aux deux zones axiales en saillie (18a), séparées par une zone sans contact correspondant à la zone axiale en creux (18b).

6. Roulement à rouleaux (2) avec espaceurs (1), comprenant une bague extérieure (3), une bague intérieure (4), une pluralité de rouleaux (6) montés entre l'intrados (3a) de la bague extérieure (3) et l'extrados (4a) de la bague intérieure (4), l'un au moins dudit intrados (3a) et dudit extrados (4a) comportant une rainure périphérique de réception (7) des rouleaux (6) ayant un fond (9), deux rives transversales (10) adjacentes au fond (9) et deux rives axiales (11) adjacentes aux deux rives transversales (10), et une pluralité d'espaceurs (1) identiques selon l'une quelconque des revendications 1 à 5, intercalés entre les rouleaux (6) et adjacents audit intrados (3a) ou extrados (4a) avec rainure de réception (7), tel que :
▪ les deux faces de guidage axial (19) de la portion médiane de guidage (17) de chaque espaceur (1) coopèrent avec glissement avec les deux rives transversales (10) de la rainure périphérique (7) de réception des rouleaux (6),
▪ les deux zones de guidage radial (18) de chaque espaceur (1) coopèrent avec glissement avec les deux rives axiales (11) de la rainure périphérique de réception (7) des rouleaux (6),
▪ la portion espaceur stricto sensu (13) de chaque espaceur (1) s'étend radialement à partir des rives axiales (11) de la rainure périphérique de réception (7) des rouleaux (6) tout en restant en deçà de l'enveloppe cylindrique des axes (6a) des rouleaux (6).

7. Roulement à rouleaux (2) avec espaceurs (1) selon la revendication 6, dans lequel les deux extrémités axiales (22) de chaque espaceur (1) sont situées sensiblement dans le plan ou en retrait du plan transversal adjacent de la bague (3, 4) avec rainure périphérique de réception (7) des rouleaux (6).

8. Roulement à rouleaux (2) avec espaceurs (1) selon l'une quelconque des revendications 6 et 7, dans lequel la face libre (23) de portion médiane de guidage opposée à la portion espaceur stricto sensu (13) de chaque espaceur (1) est écartée du fond (9) de la rainure périphérique de réception (7) des rouleaux (6), un espace libre (24) apte à la présence d'un lubrifiant étant ménagé entre eux.

9. Roulement à rouleaux (2) avec espaceurs (1) selon l'une quelconque des revendications 6 à 8, dans lequel chaque espaceur (1) est au contact avec les rouleaux (6) au plus à l'endroit des deux faces opposées (16) de sa portion espaceur stricto sensu (13).

10. Roulement à rouleaux (2) avec espaceurs (1) selon l'une quelconque des revendications 6 à 9, dans lequel la portion espaceur stricto sensu (13) de chaque espaceur (1) s'étend radialement à partir des rives axiales (11) de la rainure périphérique de réception (7) des rouleaux (6) sur une distance de l'ordre de ou inférieure au tiers du diamètre des rouleaux (6).

11. Roulement à rouleaux (2) avec espaceurs (1) selon l'une quelconque des revendications 6 à 10, dans lequel la rainure périphérique de réception (7) des rouleaux (6) avec laquelle coopèrent les espaceurs (1) est ménagée dans l'intrados (3a) de la bague extérieure (3).

12. Roulement à rouleaux (2) avec espaceurs (1) selon l'une quelconque des revendications 6 à 10, dans lequel la rainure périphérique de réception (7) des rouleaux (6) avec laquelle coopèrent les espaceurs (1) est ménagée dans l'extrados (4a) de la bague intérieure (4).

## Patentansprüche

1. Zwischenstück (1), das speziell für ein Rollenlager (2) bestimmt ist, das einen äußeren Ring (3), einen inneren Ring (4), mehrere zwischen ihnen montierte Rollen (6) und mehrere zwischen den Rollen (6) zu einem der Ringe (3, 4) hin liegende Zwischenstücke (1) umfasst, wobei das starre, entlang einer axialen Richtung (1a) langgestreckte Zwischenstück (1) Folgendes umfasst:
- einen Zwischenstückabschnitt im engeren Sinn mit zwei gegenüberliegenden Flächen, die geeignet sind, jeweils mit zwei Rollen zusammenzuwirken,
- zwei Axialwiderlageranordnungen (14), die sich an den beiden Endteilen befinden und geeignet sind, mit dem Lager (2) zusammenzuwirken, um das axiale Ausrücken des Zwischenstücks zu verhindern,
- eine Radialwiderlageranordnung (15), die geeignet ist, mit dem Lager (2) zusammenzuwirken, um seine unangebrachte radiale Verschiebung zu verhindern,
- einen mittleren Führungsabschnitt (17), der den Zwischenstückabschnitt (13) im engeren Sinn quer verlängert und zwei Axialführungsflächen (19) hat, die quer zu den beiden Enden angeordnet, zur Außenseite des Zwischenstücks (1) gewandt und geeignet sind, mit den beiden Querrändern (10) einer Umfangsnut (7) zur Aufnahme der Rollen (6) zusammenzuwirken, die in der inneren Wölbfläche (3a) des äußeren Rings (3) oder in der äußeren Wölbfläche (4a) des inneren Rings (4) ausgeführt ist, und die die beiden Axialwiderlageranordnungen (14) bilden,
- zwei Radialführungsbereiche (18), die axial angeordnet und an den beiden Enden des Zwischenstückabschnitts (13) im engeren Sinn ausgeführt sind, zu der Seite des mittleren Führungsabschnitts (17) hin- und von den Flächen (16), die geeignet sind, mit den Rollen (6) zusammenzuwirken, abgewandt sind, den beiden Axialführungsflächen (19) benachbart sind, geeignet sind, mit den beiden axialen Rändern (11) der Umfangsnut (7) zur Aufnahme der Rollen (6) zusammenzuwirken, und die die Radialwiderlageranordnung (15) bilden,
**dadurch gekennzeichnet, dass**
- der Zwischenstückabschnitt (13) im engeren Sinn im Querschnitt allgemein trapezförmig ist, mit einer großen Seite (20) neben dem mittleren Führungsabschnitt (17) und, gegenüberliegend, einer kleinen Seite (21) und zwei gegenüberliegenden Seiten, die zueinander geneigt sind und den beiden gegenüberliegenden Flächen (16) entsprechen, die dazu geeignet sind, mit den Rollen (6) zusammenwirken.

2. Zwischenstück (1) nach Anspruch 1, wobei sich die beiden Flächen (16), die dazu geeignet sind, mit den Rollen (6) des Zwischenstückabschnitts (13) im engeren Sinn zusammenwirken, über eine Öffnung mit einem Winkel α zwischen 45° und 90° erstrecken.

3. Zwischenstück (1) nach einem der Ansprüche 1 und 2, wobei jeder Radialführungsbereich (18) im Querschnitt ein Profil hat, das mittels einer dazwischenliegenden begrenzten Kontaktfläche zu dem kreisförmigen Profil des axialen Rands (11) der Umfangsnut (7) zur Aufnahme der Rollen (6) komplementär ist.

4. Zwischenstück (1) nach Anspruch 3, wobei jeder Radialführungsbereich (18) im Querschnitt ein gekrümmtes Profil mit einem Krümmungsradius hat, der kleiner als der Krümmungsradius des kreisförmigen Profils des axialen Rands (11) der Umfangsnut (7) zur Aufnahme der Rollen (6) ist.

5. Zwischenstück (1) nach Anspruch 3, wobei jeder Radialführungsbereich (18) im Querschnitt ein gekrümmtes Profil mit mindestens zwei vorragenden axialen Bereichen (18a) und einem hohlen axialen Bereich (18b) hat, so dass die Kontaktfläche mit dem axialen Rand (11) der Umfangsnut (7) zur Aufnahme der Rollen (6) mindestens zwei linear entlang einer oder mehrerer axialer Linien ausgedehnte Bereiche umfasst, die den beiden vorragenden axialen Bereichen (18a) entsprechen und durch einen kontaktlosen Bereich, der dem hohlen axialen Bereich (18b) entspricht, getrennt sind.

6. Rollenlager (2) mit Zwischenstücken (1), das einen äußeren Ring (3), einen inneren Ring (4), mehrere Rollen (6), die zwischen der inneren Wölbfläche (3a) des äußeren Rings (3) und der äußeren Wölbfläche (4a) des inneren Rings (4) montiert sind, wobei die innere Wölbfläche (3a) und/oder die äußere Wölbfläche (4a) eine Umfangsnut (7) zur Aufnahme der Rollen (6) umfasst, die einen Boden (9), zwei Querränder (10) neben dem Boden (9) und zwei axiale Ränder (11) neben den beiden Querrändern (10) hat, und mehrere identische Zwischenstücke (1) nach einem der Ansprüche 1 bis 5 umfasst, die zwischen den Rollen (6) und neben der inneren Wölbfläche (3a) oder der äußeren Wölbfläche (4a) mit der Aufnahmenut (7) liegen, so dass
- die beiden Axialführungsflächen (19) des mittleren Führungsabschnitts (17) jedes Zwischenstücks (1) gleitend mit den beiden Querrändern (10) der Umfangsnut (7) zur Aufnahme der Rollen (6) zusammenwirken,
- die beiden Radialführungsbereiche (18) jedes Zwischenstücks (1) gleitend mit den beiden axialen Rändern (11) der Umfangsnut (7) zur Aufnahme der Rollen (6) zusammenwirken,
- sich der Zwischenstückabschnitt (13) im engeren Sinn jedes Zwischenstücks (1) von den axialen Rändern (11) der Umfangsnut (7) zur Aufnahme der Rollen (6) aus radial erstreckt, jedoch diesseits des Zylindermantels der Achsen (6a) der Rollen (6) bleibt.

7. Rollenlager (2) mit Zwischenstücken (1) nach Anspruch 6, wobei sich die beiden axialen Enden (22) jedes Zwischenstücks (1) im Wesentlichen in der Ebene oder von der Querebene neben dem Ring (3, 4) mit der Umfangsnut (7) zur Aufnahme der Rollen (6) zurückversetzt befinden.

8. Rollenlager (2) mit Zwischenstücken (1) nach einem der Ansprüche 6 und 7, wobei die dem Zwischenstückabschnitt (13) im engeren Sinn jedes Zwischenstücks (1) gegenüberliegende freie Fläche (23) des mittleren Führungsabschnitts vom Boden (9) der Umfangsnut (7) zur Aufnahme der Rollen (6) beabstandet ist, wobei zwischen ihnen ein für das Vorliegen eines Schmiermittels geeigneter freier Raum (24) ausgeführt ist.

9. Rollenlager (2) mit Zwischenstücken (1) nach einem der Ansprüche 6 bis 8, wobei jedes Zwischenstück (1) höchstens an der Stelle der beiden gegenüberliegenden Flächen (16) seines Zwischenstückabschnitts (13) im engeren Sinn mit den Rollen (6) in Kontakt ist.

10. Rollenlager (2) mit Zwischenstücken (1) nach einem der Ansprüche 6 bis 9, wobei sich der Zwischenstückabschnitt (13) im engeren Sinn jedes Zwischenstücks (1) von den axialen Rändern (11) der Umfangsnut (7) zur Aufnahme der Rollen (6) aus über eine Strecke von kleiner-gleich einem Drittel des Durchmessers der Rollen (6) radial erstreckt.

11. Rollenlager (2) mit Zwischenstücken (1) nach einem der Ansprüche 6 bis 10, wobei die Umfangsnut (7) zur Aufnahme der Rollen (6), mit der die Zwischenstücke (1) zusammenwirken, in der inneren Wölbfläche (3a) des äußeren Rings (3) ausgeführt ist.

12. Rollenlager (2) mit Zwischenstücken (1) nach einem der Ansprüche 6 bis 10, wobei die Umfangsnut (7) zur Aufnahme der Rollen (6), mit der die Zwischenstücke (1) zusammenwirken, in der äußeren Wölbfläche (4a) des inneren Rings (4) ausgeführt ist.

## Claims

1. Spacer (1) specifically designed for a roller bearing (2) comprising an outer ring (3), an inner ring (4), a plurality of rollers (6) mounted between them, and a plurality of spacers (1) inserted between the rollers (6) near one of the rings (3,4), said spacer (1), rigid and extending in an axial direction (1 a), comprising:
• an actual spacer portion, having two opposing faces able to cooperate with two rollers one on each side,
• two axial stop arrangements (14) located at the two ends, able to cooperate with the bearing (2) so as to prevent the spacer from disengaging axially,
• a radial stop arrangement (15), able to cooperate with the bearing (2) so as to prevent it from unexpected radial movement,
• a median guide portion (17) transversely extending the actual spacer portion (13), having two axial guide faces (19) arranged transversely to the two ends and facing towards the outside of the spacer (1) and able to cooperate with the two transverse edges (10) of a peripheral groove (7) for receiving the rollers (6), said groove being arranged in the inner side (3a) of the outer ring (3) or in the outer side (4a) of the inner ring (4), forming the two axial stop arrangements (14),
• two radial guide areas (18), arranged axially at the two ends of the actual spacer portion (13), facing towards the side of the median guide portion (17) and away from the faces (16) suitable for cooperating with the rollers (6), adjacent to the two axial guide faces (19) and able to cooperate with the two axial edges (11) of the peripheral groove (7) for receiving the rollers (6), forming the radial stop arrangement (15),
**characterized in that** a transverse cross-section of the actual spacer portion (13) has a generally trapezoidal shape with a large side (20) adjacent to the median guide portion (17) and opposite a small side (21), and two opposing sides sloping relative to each other and corresponding to the two opposing faces (16) for cooperating with the rollers (6).

2. Spacer (1) according to claim 1, wherein the two faces (16) for cooperating with the rollers (6) of the actual spacer portion (13) define an angle α of between 45° and 90°.

3. Spacer (1) according to any one of claims 1 and 2, wherein each radial guide area (18) has a transverse cross-section of a shape complementary to the circular profile of the axial edge (11) of the peripheral groove (7) for receiving the rollers (6), provided there is a limited contact surface area between them.

4. Spacer (1) according to claim 3, wherein each radial guide area (18) has a transverse cross-section with an inwardly curving profile having a radius of curvature smaller than the radius of curvature of the circular profile of the axial edge (11) of the peripheral groove (7) for receiving the rollers (6).

5. Spacer (1) according to claim 3, wherein each radial guide area (18) has a transverse cross-section with an inwardly curving profile having at least two axial projecting areas (18a) and one axial recessed area (18b) such that the contact surface with the axial edge (11) of the peripheral groove (7) for receiving the rollers (6) comprises at least two areas extending linearly along one or a plurality of axial lines corresponding to the two projecting axial areas (18a), separated by an area without contact corresponding to the axial recessed area (18b).

6. Roller bearing (2) with spacers (1), comprising an outer ring (3), an inner ring (4), a plurality of rollers (6) mounted between the inner side (3a) of the outer ring (3) and the outer side (4a) of the inner ring (4), at least one of said inner side (3a) and said outer side (4a) comprising a peripheral groove (7) for receiving the rollers (6), said groove having a bottom (9), two transverse edges (10) adjacent to the bottom (9), and two axial edges (11) adjacent to the two transverse edges (10), and a plurality of identical spacers (1) according to any one of claims 1 to 5, inserted between the rollers (6) and adjacent to said inner side (3a) or outer side (4a) with receiving groove (7), such that:
• the two axial guide faces (19) of the median guide portion (17) of each spacer (1) slidingly cooperate with the two transverse edges (10) of the peripheral groove (7) for receiving the rollers (6),
• the two radial guide areas (18) of each spacer (1) slidingly cooperate with the two axial edges (11) of the peripheral groove (7) for receiving the rollers (6),
• the actual spacer portion (13) of each spacer (1) extends radially from the axial edges (11) of the peripheral groove (7) for receiving the rollers (6) while remaining outside of the cylindrical casing of the axles (6a) of the rollers (6).

7. Roller bearing (2) with spacers (1) according to claim 6, wherein the two axial ends (22) of each spacer (1) are located substantially in the plane or recessed relative to the adjacent transverse plane of the ring (3,4) with peripheral groove (7) for receiving the rollers (6).

8. Roller bearing (2) with spacers (1) according to any one of claims 6 and 7, wherein the free face (23) of the median guide portion, opposite the actual spacer portion (13) of each spacer (1), is at a distance from the bottom (9) of the peripheral groove (7) for receiving the rollers (6), a free space (24) suitable for accommodating a lubricant being arranged between them.

9. Roller bearing (2) with spacers (1) according to any one of claims 6 to 8, wherein at most each spacer (1) is in contact with the rollers (6) at the location of the two opposing faces (16) of its actual spacer portion (13).

10. Roller bearing (2) with spacers (1) according to any one of claims 6 to 9, wherein the actual spacer portion (13) of each spacer (1) extends radially from the axial edges (11) of the peripheral groove (7) for receiving the rollers (6), for a distance of about or of less than one third of the diameter of the rollers (6).

11. Roller bearing (2) with spacers (1) according to any one of claims 6 to 10, wherein the peripheral groove (7) for receiving the rollers (6), with which the spacers (1) cooperate, is arranged in the inner side (3a) of the outer ring (3).

12. Roller bearing (2) with spacers (1) according to any one of claims 6 to 10, wherein the peripheral groove (7) for receiving the rollers (6), with which the spacers (1) cooperate, is arranged in the outer side (4a) of the inner ring (4).
